# EUROPÄISCHE PATENTSCHRIFT

(11) **EP 2 772 660 B1**
(45) Veröffentlichungstag und Bekanntmachung des Hinweises auf die Patenterteilung: **04.07.2018**
(21) Anmeldenummer: 14155985.6
(22) Anmeldetag: 20.02.2014
(51) Int. Cl.: F16F 1/12

(54) **Zugfeder mit Kraft übertragendem Endabschnitt**
Tension spring with force transferring end section
Ressort de traction comprenant une section terminale à transmission de force

(30) Priorität: 02.03.2013 DE 202013100912 U
(43) Veröffentlichungstag der Anmeldung: 03.09.2014
(73) Patentinhaber: Hirsch KG Fabrik technischer Federn, 95615 Marktredwitz (DE)
(72) Erfinder: Himmer, Reinhard, 95615 Marktredwitz (DE)
(74) Vertreter: Müller Hoffmann & Partner

(56) Entgegenhaltungen:
- CN-A- 102 853 015
- DE-A1-102004 031 867
- DE-C- 606 718
- DE-U- 7 416 152
- GB-A- 191 205 133
- US-A- 5 004 216
- US-A1- 2004 077 420

## Beschreibung

Die vorliegende Erfindung betrifft eine Zugfeder, umfassend einen Windungen aufweisenden Federkörper und in axialer Richtung entgegengesetzt am Federkörper angeordnete Federenden zum Anschließen der Zugfeder an miteinander zu verbindenden Bauteilen, wobei wenigstens ein Federende als Anschlussstück, vorzugsweise in Form einer Öse, ausgebildet ist, das einen Übergangsabschnitt, einen Aufhängabschnitt und einen freien Endabschnitt umfasst, wobei der Übergangsabschnitt des Anschlussstücks mit einer in axialer Richtung des Federkörpers zum Anschlussstück benachbarten ersten Windung des Federkörpers verbunden ist, und wobei der freie Endabschnitt des wenigstens einen Anschlussstücks mit wenigstens einer Windung, insbesondere der ersten Windung des Federkörpers in Kraftübertragungsverbindung steht, um auf die Zugfeder wirkende Kräfte am Übergangsabschnitt und am freien Endabschnitt des Anschlussstücks einzuleiten.

Eine solche Feder ist aus der DE 606718 bekannt, wobei der freie Endabschnitt in axialer Richtung zwischen der ersten Windung und der zweiten Windung aufgenommen ist und in radialer Richtung über den Außenumfang des Federkörpers vorsteht.

Die Überlegungen, die zu einer Zugfeder gemäß der DE 606718 geführt haben, können wie folgt zusammengefasst werden. Zugfedern unterliegen im Bereich ihrer Anschlusstücke bzw. Ösen, mit denen sie an zu verbindenden Bauteilen befestigt sind, kombinierten Torsions-und Biegebelastungen, wenn die Zugfeder beansprucht wird. Diese Belastungen können zu einer Reduzierung der Haltbarkeit der Zugfeder und insbesondere ihrer Anschlusstücke bzw. Ösen führen, weil die Anschlussstücke bzw. Ösen im Bereich ihrer Biegeradien stark beansprucht sind und brechen können. Diese Beanspruchung erfolgt insbesondere im Übergangsabschnitt, der zwischen einer in axialer Richtung des Federkörpers zum Anschlussstück bzw. zur Öse benachbarten ersten Windung des Federkörpers und dem Aufhängabschnitt des Anschlussstücks bzw. der Öse liegt.

Die bekannte Zugfeder stellt zwar eine Verbesserung im Hinblick auf das Einleiten der Kräfte von der Öse auf den Federkörper dar, weist aber selbst weitere Nachteile auf. Aufgrund der Aufnahme des freien Endabschnitts zwischen der ersten Windung und der zweiten Windung unterliegt der freie Endabschnitt zumindest in einer entspannten (zusammengezogenen) Stellung der Zugfeder Druckkräften, die in axialer Richtung durch die beiden Windungen auf den freien Endabschnitt ausgeübt werden. Ferner führt der über den Außenumfang des Federkörpers vorstehende Endabschnitt zu einer Vergrößerung des Platzbedarfs einer solchen Zugfeder, so dass diese nicht in jedem Fall als Ersatz für eine Zugfeder mit herkömmlicher Öse verwendet werden kann, deren nicht an der ersten Windung eingehängte freie Endabschnitt radial nicht über den Federkörper vorsteht. Ein weiterer Nachteil ist darin zu sehen, dass der radial vorstehende freie Endabschnitt beim Einbau oder im Gebrauch zu Beschädigungen an umliegenden Bauteilen einer Maschine bzw. Vorrichtung führen kann, in der die Zugfeder eingebaut ist bzw. wird. Ferner stellt ein solcher vorstehender freier Endabschnitt auch ein Verletzungsrisiko für einen Benutzer dar, der die Feder bei der Herstellung bzw. beim Ein- oder Ausbau mit seinen Händen bzw. Fingern ergreifen und handhaben muss.

Eine andere Lösung zur Entlastung der Federöse ist in der US 5,004,216 vorgeschlagen, wobei ein zusätzlicher Clip in den Federkörper eingesetzt ist.

Ferner zeigt die US 2004/0077420 A1 Federn mit unterschiedlichen Windungsdurchmessern. Aufgabe der Erfindung ist es, die genannten Nachteile zu überwinden.

Die Aufgabe wird gelöst durch eine Zugfeder mit den Merkmalen von Anspruch 1.

Dabei weist die erste Windung einen kleineren oder kleiner werdenden Radius bzw. Durchmesser auf als eine sich anschließende weitere Windung des Federkörpers, der Übergangsabschnitt geht in den Aufhängabschnitt über und der Aufhängabschnitt geht in den freien Endabschnitt über. Die Verbindung des freien Endabschnitts des Anschlussstücks bzw. der Öse mit der ersten Windung mit kleinerem Radius bzw. Durchmesser ermöglicht ein Anliegen des freien Endabschnitts an der ersten Windung, ohne das der freie Endabschnitt zwischen der ersten und zweiten Windung aufgenommen ist und ohne dass der Endabschnitt radial über den Federkörper vorsteht. Somit können die oben beschriebenen Nachteile überwunden werden. Die Verbindung des freien Endabschnitts mit dem Federkörper führt auch bei einer radial kleineren ersten Windung zu einer Erhöhung des Belastbarkeit der Zugfeder sowohl bei dynamischer als auch bei statischer Belastung, so dass insgesamt die Haltbarkeit und die Einsatzmöglichkeiten der der Zugfeder verbessert werden können.
Weiterbildend wird vorgeschlagen, dass die Durchmesserdifferenz zwischen der ersten Windung und der benachbarten Windung abhängig von einem Strangdurchmesser eines Strangs ist, aus dem die Zugfeder bzw. die Windungen des Federkörpers gebildet sind.

Es ist dabei bevorzugt, dass die Durchmesserdifferenz etwa das 1,0 bis 3,0-Fache des Strangdurchmessers beträgt, vorzugsweise etwa das 1,1 bis 2,0-Fache, insbesondere etwa das 1,1 bis 1,5-Fache. Es ist aber auch denkbar, dass die Durchmesserdifferenz größer gewählt wird.

Um ein Verhaken des freien Endabschnitts mit der zweiten oder einer weiteren Windung zu Vermeiden und um einen radialen Abstand zwischen dem freien Endabschnitt und einer zweiten bzw. weiteren Windung zu ermöglichen, wird vorgeschlagen, dass der Mittelpunkt der ersten Windung bezogen auf die axiale Richtung in radialer Richtung versetzt ist, vorzugsweise um einen Versatz, der etwa dem 0,5-Fachen bis 1,0-Fachen der Durchmesserdifferenz zwischen der ersten Windung und der anschließenden weiteren Windung entspricht.

Der an der ersten Windung anliegende freie Endabschnitt kann derart ausgebildet sein, dass sich die erste Windung im entspannten Zustand der Zugfeder in axialer Richtung direkt an die benachbarte Windung anschließt, so dass zwischen der ersten Windung und der benachbarten Windung im Wesentlichen der gleiche axiale Abstand gebildet ist wie zwischen anderen benachbarten Windungen des Federkörpers. In einem solchen entspannten Zustand der Zugfeder ist der freie Endabschnitt innerhalb des Federkörpers, insbesondere innerhalb des Innenumfangs der benachbarten bzw. zweiten Windung aufgenommen, ohne dass der freie Endabschnitt mit der benachbarten bzw. zweiten Windung in Kontakt steht.

Bevorzugt ist der freie Endabschnitt derart ausgebildet, dass er im Wesentlichen geradlinig, vorzugsweise in im Wesentlichen radialer Richtung bezogen auf die Windung, von der ersten, insbesondere exzentrisch angeordneten Windung zur benachbarten Windung verläuft und an der ersten Windung des Federkörpers anliegt.

Weiter wird vorgeschlagen, dass der freie Endabschnitt eine Stirnseite aufweist, die der benachbarten Windung in radialer Richtung gegenüberliegt, insbesondere ihrem Innenumfang gegenüber liegt, wobei vorzugsweise der freie Endabschnitt eine radiale Länge aufweist, die im Wesentlichen gleich lang oder länger ist wie der Durchmesser eines Strangs, aus dem die Zugfeder bzw. die Windungen hergestellt sind. Die Stirnseite kann insbesondere eine Schnittfläche sein, die nach dem Abtrennen des Strangs entsteht, aus dem die Zugfeder hergestellt ist.

Wenn der freie Endabschnitt an der wenigstens einen Windung anliegt, werden auf die Zugfeder wirkende Kräfte sowohl im Übergangsabschnitt, der sich an die benachbarte Windung des Federkörpers anschließt, als auch im Kontaktbereich zwischen Endabschnitt und erster Windung auf das Anschlussstück übertragen. Es wird somit verhindert, dass die Zugkräfte nur über den Übergangsabschnitt auf das Anschlussstück bzw. die Öse eingeleitet werden. Die Kraftverteilung im Anschlussstück bzw. in der Öse wird gleichmäßiger, so dass an den einzelnen Abschnitten geringere Beanspruchungen bzw. Spannungen auftreten, was insgesamt zu einer verbesserten Haltbarkeit der Zugfeder führt.

Der freie Endabschnitt kann ferner materialschlüssig mit der wenigstens einen Windung verbunden sein. Dies kann beispielsweise durch eine Verschweißung zwischen Endabschnitt und Windung realisiert sein. Denkbar ist auch eine Verbindung aus einem Kunststoff, etwa in Form einer Ummantelung oder Manschette.

Alternativ oder ergänzend kann der freie Endabschnitt des Anschlussstücks mittels eines Adapters mit der wenigstens einen Windung verbunden sein. Ein derartiger Adapter kann beispielsweise einen einstückigen Körper aufweisen mit zwei Öffnungen, wobei durch die eine Öffnung der Strang der Windung geführt ist und in der anderen Öffnung der freie Endabschnitt angeordnet ist. Ein solcher Adapter kann auch als eine Art Clip ausgeführt sein, der nach dem Umformen eines Strangs zur Zugfeder an dieser angebracht werden kann.

Erfindungsgemäß ist der freie Endabschnitt derart ausgebildet, dass er im Inneren des Federkörpers angeordnet ist.

Das Anschlussstück ist vorzugsweise als halbe oder ganze deutsche Öse oder englische Öse oder Hakenöse oder dergleichen ausgeführt.

Es wird weiter vorgeschlagen, dass beide Federenden als Anschlusstücke, vorzugsweise Ösen ausgeführt sind oder dass das nicht als Anschlussstück ausgeführte Federende ein Einschraubstück, Gewindebolzen oder dergleichen aufweist.

Der Federkörper kann zylindrisch oder konisch ausgestaltet sein, wobei die Windungen des Federkörpers kreisförmig oder oval oder vieleckig oder gebogen mit unterschiedlichen Radien ausgebildet sind.

Die Zugfeder ist bevorzugt aus einem Strang oder einem Draht oder Rohr gebildet, wobei der Strang- oder der Draht- oder Rohrquerschnitt vorzugsweise kreisförmig oder oval oder vieleckig ausgeführt ist. Dabei kann die Zugfeder aus einem Metall oder einer Metalllegierung oder/und einem Kunststoff hergestellt sein. Die Zugfeder kann insbesondere auch aus einem Metall bzw. aus einer Metalllegierung mit einer Kunststoffummantelung hergestellt sein. Denkbar sind auch Zugfedern aus Kunststoffen bzw. aus verstärkten Kunststoffen, wie etwa glasfaserverstärkten Kunststoffen.

Ferner wird vorgeschlagen, dass das Anschlussstück gerade oder/und gebogen, insbesondere rund oder oval oder vieleckig ausgeführt sein kann.

Nachfolgend wird die Erfindung anhand von verschiedenen Ausführungsformen beispielhaft und nicht einschränkend beschrieben.
- Fig. 1: zeigt schematisch und vereinfacht zum besseren Verständnis der Erfindung ein erstes Beispiel einer Zugfeder als seitliche Aufrissdarstellungen (a) und (c), als Draufsicht in axialer Richtung auf das Anschlussstück (b) und als perspektivische Darstellung (d).
- Fig. 2: zeigt schematisch und vereinfacht zum besseren Verständnis der Erfindung ein zweites Beispiel einer Zugfeder als seitliche Aufrissdarstellung (a) und als perspektivische Darstellung (b).
- Fig. 3: zeigt zum besseren Verständnis der Erfindung ein drittes Beispiel einer Zugfeder in perspektivischer Darstellung.
- Fig. 4: zeigt zum besseren Verständnis der Erfindung in den Teilfiguren a) bis c) ein viertes, fünftes und sechstes Beispiel einer Zugfeder in perspektivischer Darstellung.
- Fig. 5 bis 10: zeigen schematisch und vereinfacht in den jeweiligen Teilfiguren a) bis d) eine erste bis sechste Ausführungsform einer Zugfeder in Schnittdarstellung (a), seitlicher Aufrissdarstellung (b), Draufsicht auf das Federende bzw. Anschlussstück (c) und in perspektivischer Darstellung (d).
- Fig. 11: zeigt in den Teilfiguren a) und b) eine Zugfedern mit beiden Federenden entsprechend der zweiten und vierten Ausführungsform.
- Fig. 12: zeigt in den Teilfiguren a) und b) Zugfedern mit beiden Federenden entsprechend der zweiten und vierten Ausführungsform in Kombination mit einem als Einschraubteil bzw. Gewindebolzen ausgeführten Federende.

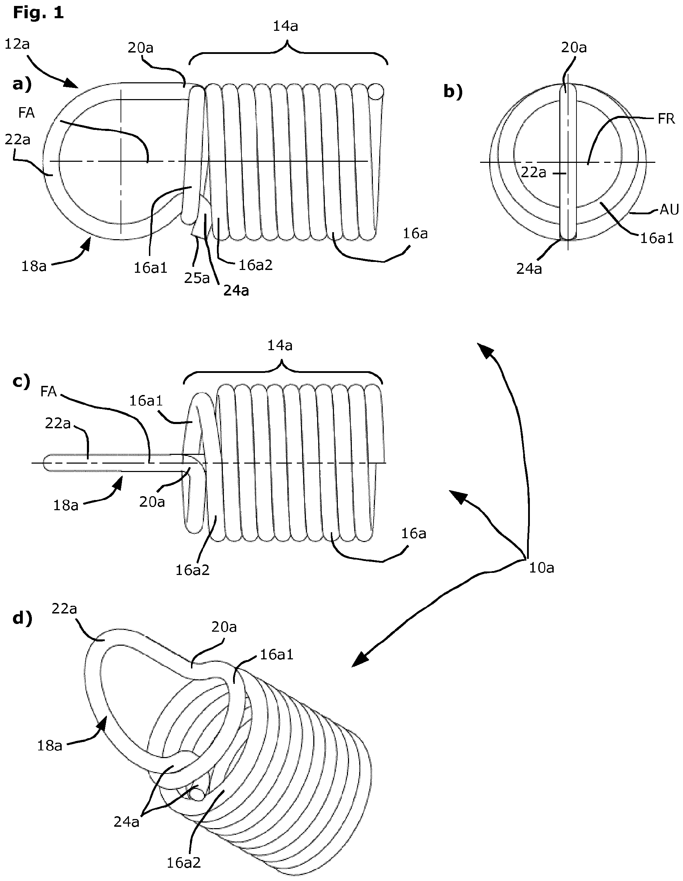

Für die nachfolgenden Beispiele zum besseren Verständnis der Erfindung und für die Ausführungsformen wird darauf hingewiesen, dass für gleiche Bauteile die gleichen Bezugszeichenzahlen jeweils mit anderen Kleinbuchstaben verwendet werden. In den Figuren sind zum besseren Verständnis teilweise Bezugszeichen aufgenommen, die lediglich in Bezug auf das erste Beispiel (Fig.1) genauer beschrieben sind. Es wird insoweit zum prinzipiellen Aufbau und zur prinzipiellen Funktionsweise auf die Erläuterungen zum ersten Beispiel verwiesen. Ferner wird auf die Bezugszeichenliste am Ende der Beschreibung hingewiesen, die ebenfalls als Referenz dient für in den Figuren gekennzeichnete, aber nicht weiter erläuterte Teile der verschiedenen Beispiele bzw. Ausführungsformen.

In Fig. 1 ist eine Zugfeder 10a eines ersten Beispiels mit ihrem Federende 12a und ihrem Federkörper 14a schematisch dargestellt. Der Federkörper 14a umfasst mehrere Windungen 16a. Ein zweites Federende der Zugfeder 10a ist nicht dargestellt würde sich aber bezugnehmend auf die Figuren 1a) und c) rechts nach weiteren Windungen des Federkörpers anschließen. Die Windungen 16a sind um eine Federachse FA angeordnet, die im vorliegenden Beispiel das Zentrum für die kreisförmig gebogenen Windungen 16a bildet. Die Federachse FA definiert für dieses und alle nachfolgenden Ausführungsbeispiele die axiale Richtung.

Das Federende 12a ist als Anschlussstück 18a ausgebildet mit einem Übergangsabschnitt 20a, einem Aufhängabschnitt 22a und einem freien Endabschnitt 24a. Der Übergangsabschnitt 20a ist der Teil des Anschlussstücks 18a, der aus der ersten Windung 16a1 den Übergang in das Anschlussstück 18a bildet, wobei der Übergangsabschnitt 20a einen anderen Biegeradius und im vorliegenden Beispiel auch eine andere Biegerichtung als die erste Windung 16a1 aufweist. Der Übergangsabschnitt 20a geht über in den Aufhängabschnitt 22a, welcher wiederum in den freien Endabschnitt 24a übergeht.

Der Endabschnitt 24a ist zwischen die erste Windung 16a1 und die zweite Windung 16a2 aufgenommen. Er verläuft bezogen auf den Federkörper 14a bzw. die Windungen 16a in radialer Richtung FR von innen nach außen. Der Endabschnitt 24a liegt an der ersten Windung 16a1 an, so dass auf die Zugfeder wirkenden Zugkräfte sowohl über den Übergangsabschnitt 20a als auch den Endabschnitt 24a in das Anschlussstück 18a eingeleitet werden. Diese Zugkräfte werden dann mittels des Aufhängabschnitts 22a an einem hier nicht weiter dargestellten Bauteil abgestützt, mit dem die Zugfeder 10a verbunden ist. Der Endabschnitt 24a ist bei dieser Ausführungsform hakenartig gekrümmt. Hierdurch kann er an der ersten Windung 16a1 eingehängt werden. Das Anschlussstück 18a ist als kreisbogenförmige Öse ausgeführt, ähnlich zu einer bekannten Hakenöse oder sogenannten deutschen Öse.

Ferner ist die erste Windung 16a1, die sich in axialer Richtung FA an das Anschlussstück 18a anschließt, mit einem kleineren bzw. kleiner werdenden Radius gekrümmt als die darauf folgenden Windungen 16a2 und 16a. Anders ausgedrückt kann auch gesagt werden, dass der Durchmesser d1 der ersten Windung 16a1 kleiner ist als der Durchmesser d2 der benachbarten (zweiten) Windung 16a2 bzw. der weiteren Windungen 16a des Federkörpers 14a. Der Endabschnitt 24a, der an der ersten Windung 16a anliegt, steht somit nicht über den Außenumfang AU des Federkörpers 14b vor (Fig. 1b). Eine Stirnseite 25a des freien Endabschnitts 24a liegt also innerhalb eines Außenumfangs AU des Federkörpers 14a bzw. der zweiten Windung 16a2.

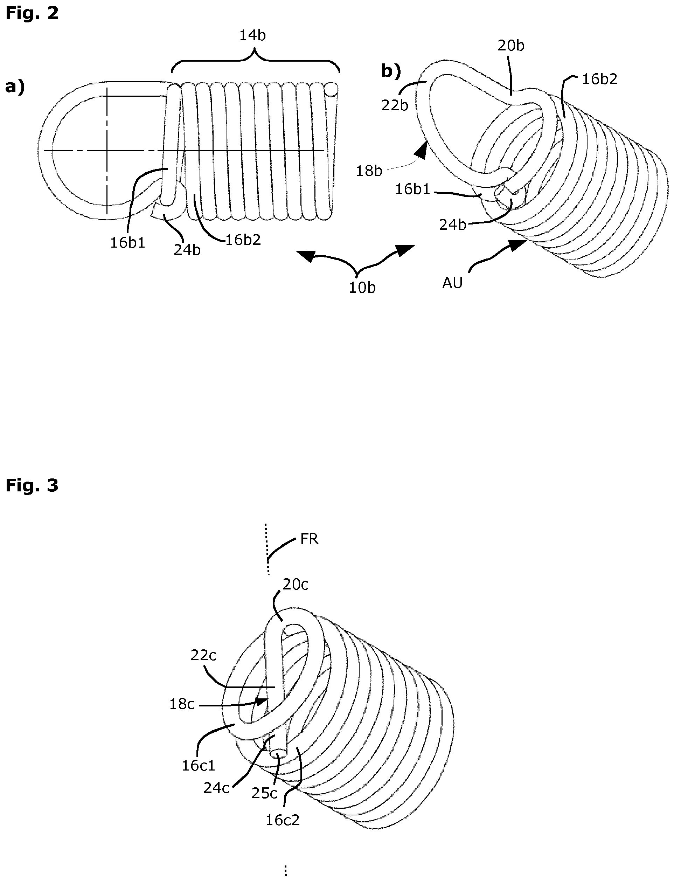

Figur 2 zeigt ein zweites und drittes Beispiel einer Zugfeder 10b bzw. 10c. In den Figuren 2a) und b) ist im Vergleich zur ersten Ausführungsform lediglich der Endabschnitt 24b anders ausgeführt. Der Endabschnitt 24b umgibt die erste Windung 16b1 nahezu vollständig, so dass er ringartig um die Windung 16b1 herumgeführt ist. Dabei ist der Endabschnitt 24b von der Innenseite um die Windung 16b1 herum zur Außenseite gebogen. Auch bei dem zweiten Beispiel ist die erste Windung 16b1 mit einem kleineren bzw. kleiner werdenden Radius gekrümmt bzw. gebogen. Ferner steht der Endabschnitt 24b nicht über den Außenumfang AU des Federkörpers 14b vor.

Figur 3) zeigt das dritte Beispiel des Anschlussstücks 18c. Dabei ist der Aufhängabschnitt 22c geradlinig in im Wesentlichen radialer Richtung FR ausgebildet. Der freie Endabschnitt 24c ist ebenfalls als gerades Stück ausgeführt und zwischen der ersten Windung 16c1 und der zweiten Windung 16c2 aufgenommen. Auch bei dieser Ausführungsform ist die erste Windung 16c1 mit einem kleineren bzw. kleiner werdenden Radius gebogen bzw. gekrümmt, analog zum ersten und zweiten Beispiel der Fig. 1 bzw. 2a) und 2b). Im Gegensatz zum ersten und zweiten Beispiel ist das Anschlussstück 18c im Wesentlichen gerade ausgeführt, so dass es nicht eine Öse im herkömmlichen Sinne bildet. Die Funktionsweise des Anschlussstücks 18c ist aber die gleiche wie bei einer zumindest teilweise gebogenen Ausführung des Anschlussstücks als Öse, wie dies in den Fig. 1, 2a) und 2b) und nachfolgend auch in den weiteren Figuren dargestellt ist. Auch bei dieser Ausführungsform liegt die Stirnseite 25c des freien Endabschnitts 24c innerhalb des Außenumfangs des Federkörpers 14c bzw. der zweiten Windung 16c2.

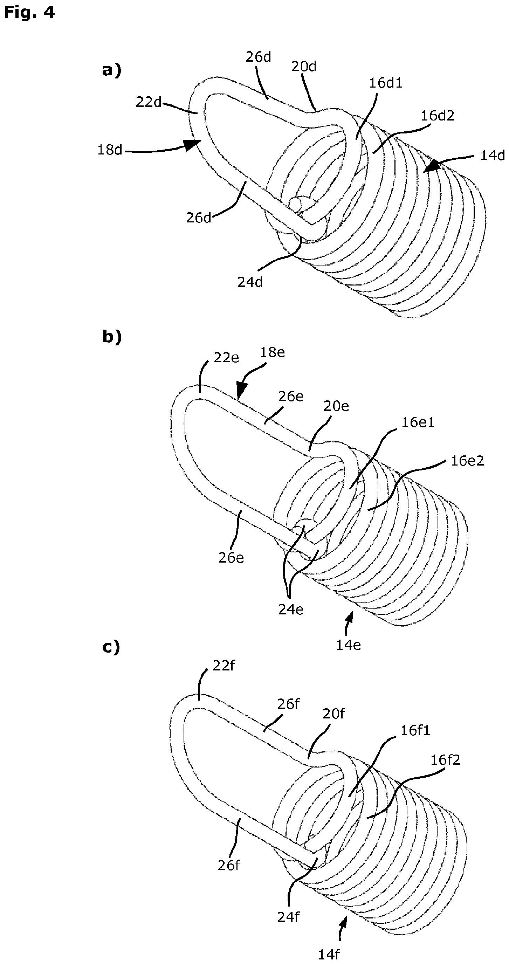

Das vierte Beispiel in Fig. 4a) zeigt eine hakenartige Ausgestaltung des Anschlussstücks 18d, wobei der Übergangsabschnitt 20d und der Endabschnitt 24d über jeweilige gerade und zueinander geneigte Schenkelabschnitte 26d mit dem Aufhängabschnitt 22d verbunden sind. Der Endabschnitt 24d ist hier ringförmig bzw. geschlossen ausgeführt, wobei der Endabschnitt 24d in radialer Richtung von der Außenseite zur Innenseite des Federkörpers 14d geführt und zwischen der ersten Windung 16d1 und der zweiten Windung 16d2 aufgenommen ist. Der Endabschnitt 24d ist also von der Außenseite des Federkörpers 14d um die Windung 16d1 herum zur Innenseite gebogen. Die erste Windung 16d1 ist auch in diesem Beispiel mit einem kleineren bzw. kleiner werdenden Radius gekrümmt bzw. gebogen.

In Figur 4b) ist das fünfte Beispiel dargestellt mit einem Anschlussstück 18e, das den Übergangsabschnitt 20e, den Aufhängabschnitt 22e und den Endabschnitt 24e umfasst. der Übergangsabschnitt 20e und der Endabschnitt 24e sind durch gerade und zueinander im Wesentlichen parallele Schenkelabschnitte 26e mit dem Aufhängabschnitt 22e verbunden. Der Endabschnitt 24e ist bezogen auf den Federkörper 14e von radial außen nach radial innen zwischen der ersten Windung 16e1 und der zweiten Windung 16e2 eingeführt. In diesem Beispiel ist der Endabschnitt 24e ringförmig bzw. geschlossen ausgeführt.

Das sechste Beispiel gemäß Figur 4c) unterscheidet sich von der fünften Ausführungsform (Fig. 4b) lediglich durch die hakenartige bzw. offene Ausführung des Endabschnitts 24f. Im Übrigen ist das Anschlussstück 18f gleich aufgebaut wie das Anschlussstück 18e (Fig. 4b). Bei beiden Beispielen der Fig. 4b) und 4c) ist die erste Windung 16e1 bzw. 16f1 jeweils mit einem kleineren bzw. kleiner werdenden Radius gebogen bzw. gekrümmt als die zweite Windung 16e2 bzw. 16f2 und die weiteren Windungen des Federkörpers 14e bzw. 14f.

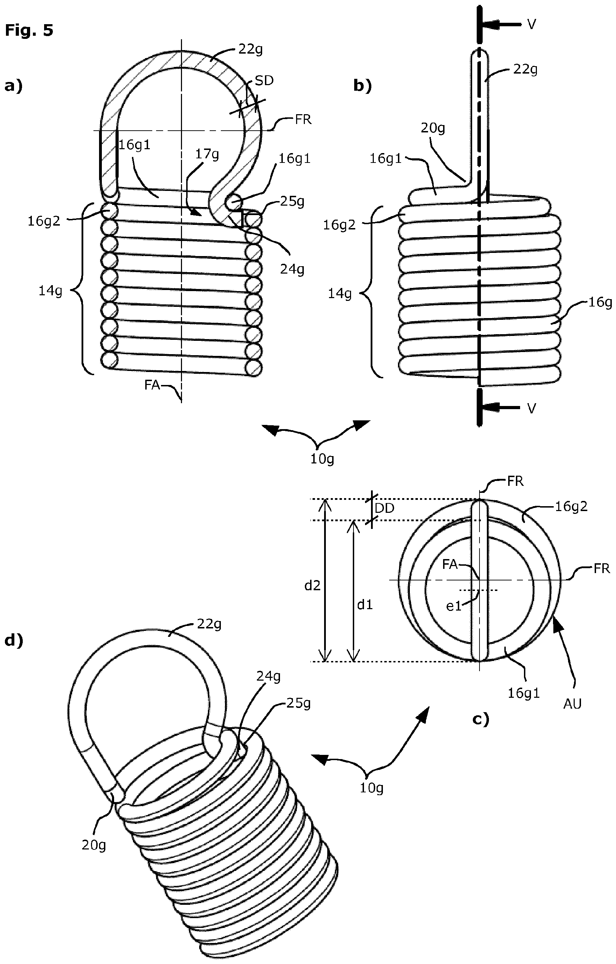

In den nachfolgenden Figuren 5 bis 10 sind in den Teilfiguren a) bis d) jeweils eine Ausführungsform einer Zugfeder dargestellt als seitliche Aufrissdarstellung mit zugehörigem Längsschnitt in den Teilfiguren b) und a), sowie als Draufsicht auf das Federende bzw. die Öse in Teilfigur c) und als perspektivische Ansicht in Teilfigur d). Die Schnittdarstellung der Teilfigur a) entspricht jeweils der mit römischen Ziffern bezeichneten Schnittlinie der Teilfigur b).

Fig. 5 zeigt eine erste Ausführungsform, bei welcher das Anschlussstück ähnlich wie bei der ersten Ausführungsform (Fig. 1) ausgebildet ist. Allerdings ist der freie Endabschnitt 24g in radialer Richtung verkürzt verglichen mit dem Endabschnitt 24a des ersten Beispiels. Der Endabschnitt 24g ist um die Innenseite der ersten Windung 16g1 gebogen und liegt mit einem sich im Wesentlichen radial erstreckenden Endstück an der axial innen liegenden Seite der ersten Windung 16g1 an. Der freie Endabschnitt 24g weist eine Stirnseite 25g auf, die einer Innenseite 17g, bzw. dem Innenumfang der benachbarten (zweiten) Windung 16g2 gegenüberliegt. Zwischen der Stirnseite 25g und der Innenseite 17g ist ein Abstand vorgesehen, so dass sich der freie Endabschnitt 24g und die zweite Windung 16g2 nicht berühren.

In der in Fig. 5c) dargestellten Draufsicht auf das Federende wird ersichtlich, dass die erste Windung 16g1 einen Durchmesser d1 aufweist, der kleiner ist als der Durchmesser d2 der in axialer Richtung anschließenden bzw. benachbarten zweiten Windung 16g2. Die Durchmesserdifferenz DD beträgt bevorzugt etwa das 1,0 bis 3,0 Fache des Durchmessers SD eines Strangs 19g, aus dem die Zugfeder 10g hergestellt ist. Die Durchmesserdifferenz kann aber auch größer sein. In der vorliegenden Ausführungsform beträgt die Durchmesserdifferenz DD etwa das 1,1 bis 1,5-Fache des Strangdurchmessers SD.

In einem in Fig. 5 dargestellten entspannten, also zusammengezogenen Zustand der Zugfeder 10g liegt der freie Endabschnitt 24g mit seiner Stirnseite 25g innerhalb des Federkörpers 14g, insbesondere innerhalb der zweiten Windung 16g2. Die erste Windung 16g1 überdeckt in axialer Richtung FA wenigstens teilweise die zweite Windung 16g2, insbesondere im Bereich des Übergangsabschnitts 20g. Im Bereich des Übergangsabschnitts 20g liegen die erste Windung 16g1 und die zweite Windung 16g2 aneinander an und berühren sich. Wird die Zugfeder 10g mit Zugkräften belastet, entfernern sich die erste Windung 16g1, die zweite Windung 16g2 und alle weiteren Windungen 16g in axialer Richtung voneinander. Dabei erfolgt die Einleitung von Zugkräften von Anschlussstück 18g auf den Federkörper 14g am freien Endabschnitt 24g und am Übergangsabschnitt 20g, wobei sich der freie Endabschnitt 24g in axialer Richtung FA freie entlang der Innenseite 17g des Federkörpers 14g bzw. der zweiten Windung 16g2 bewegen kann.

Aus der Fig. 5c) ist ferner ersichtlich, dass die erste Windung 16g1 mit ihrem kleineren bzw. kleiner werdenden Radius bzw. mit ihrem kleineren Durchmesser d1bezogen auf die Federachse FA exzentrisch angeordnet ist. Der Mittelpunkt eines für die erste Windung 16g1 angenommenen Kreises mit dem Durchmesser d1 liegt somit etwa bei e1.

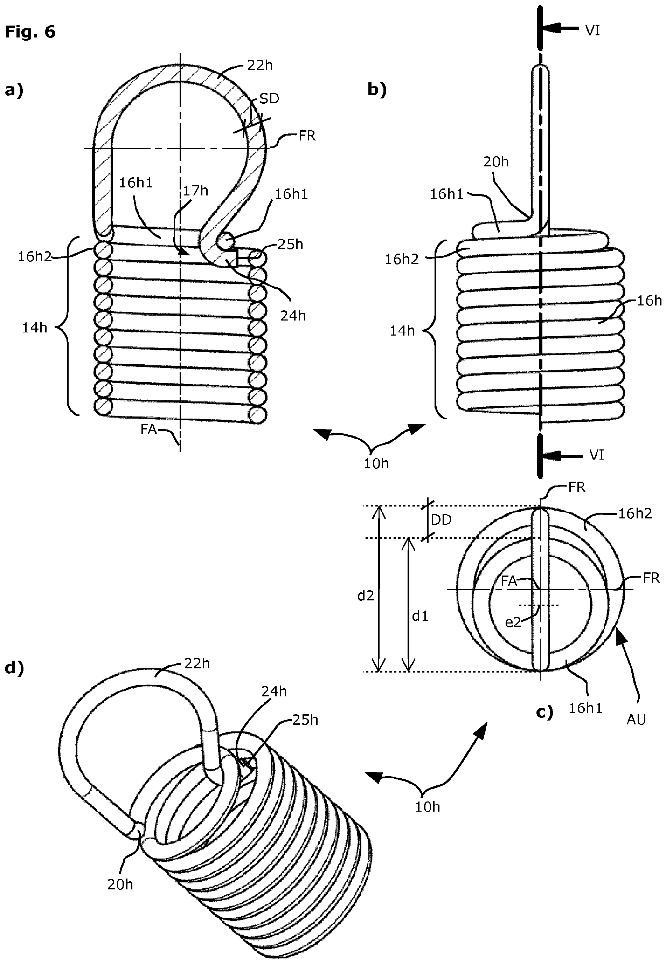

In Fig. 6 ist eine zweite Ausführungsform dargestellt, die eine zur ersten Ausführungsform sehr ähnliche Ausgestaltung des Federendes 12h zeigt. Entsprechend wird für die Beschreibung gleichartiger Elemente und Funktionsweisen auf die siebte oder ggf. auch die erste bis sechste Ausführungsform verwiesen. Bei der zweiten Ausführungsform ist allerdings der Radius bzw. Durchmesser der ersten Windung 16h1 noch kleiner als in der siebten Ausführungsform. Entsprechend beträgt die Durchmesserdifferenz DD (Fig. 6c) etwa das 1,5 bis 2,0-Fache des Strangdurchmessers SD. Aufgrund des kleineren Durchmessers ist auch der Mittelpunkt eines für die erste Windung 16h1 angenommenen Kreises mit dem Durchmesser d1 stärker exzentrisch angeordnet bei e2 verglichen mit der Zugfeder der ersten Ausführungsform (Fig. 5c). Es ist bei diesem Unterschied des Betrags der Exzentrizität von der Federachse zu beachten, dass die gezeigten Figuren zueinander nicht exakt im gleichen Maßstab dargestellt sind, so dass die Unterschiede in der Realität bzw. bei gleichmaßstäblicher Darstellung ggf. unterschiedlich sein können zu denjenigen, die hier in den Figuren dargestellt sind. Durch den kleineren Durchmesser d1 (verglichen mit der ersten Ausführungsform) ist auch der radiale Abstand zwischen der Stirnseite 25h und der Innenseite 17h der zweiten Windung 16h2 größer als in der siebten Ausführungsform.

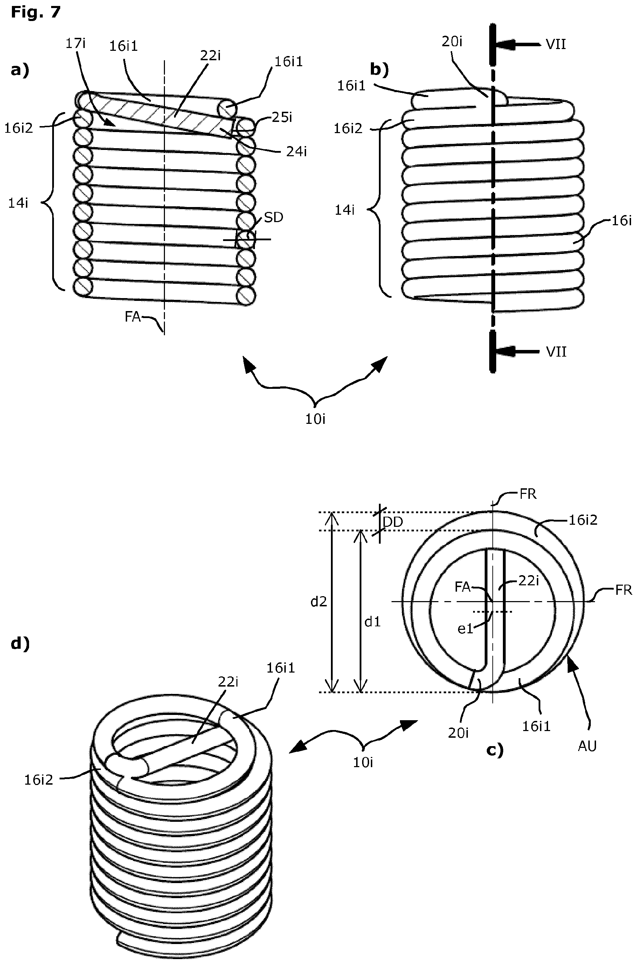

Fig. 7 zeigt eine dritte Ausführungsform, bei welcher der Aufhängabschnitt 22i und der freie Endabschnitt 24i geradlinig ausgeführt sind, ähnlich wie bei dem dritten Beispiel (Fig.3). Auch bei dieser dritten Ausführungsform liegt der freie Endabschnitt 24i lediglich an der ersten Windung 16i1 an. Die Stirnseite 25i des Endabschnitts 24i liegt gegenüber der Innenseite 17i der zweiten Windung 16i2. Hinsichtlich der Durchmesserunterschiede und der exzentrischen Anordnung des Mittelpunktes der im Wesentlichen kreisförmigen ersten Windung 16i1 wird auf das zuvor Gesagte zur ersten und zweiten Ausführungsform verwiesen.

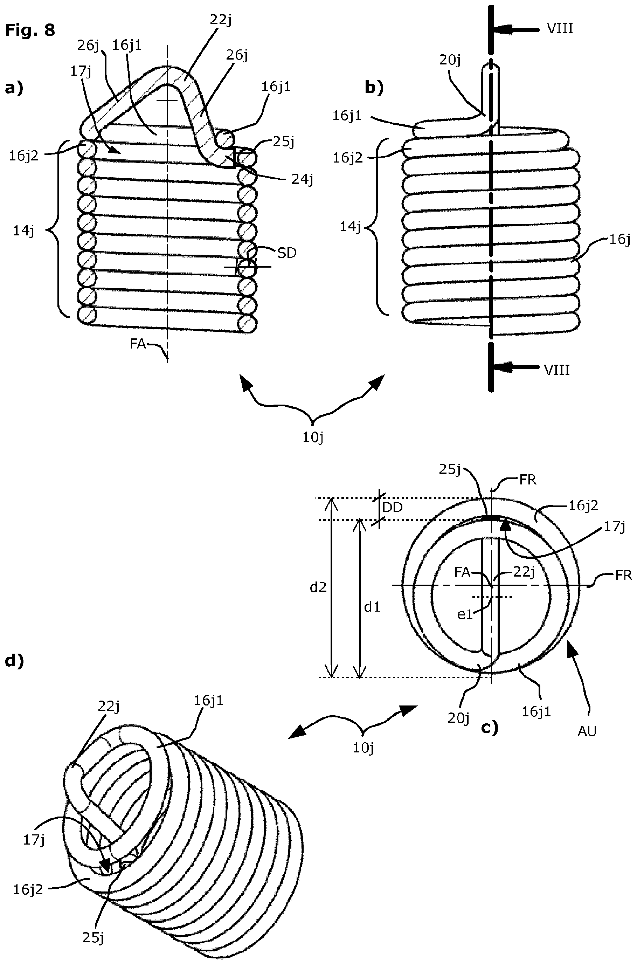

Fig. 8 zeigt eine vierte Ausführungsform, bei welcher der Aufhängabschnitt 22j winkelartig ausgebildet ist mit zwei Schenkelabschnitten 26j, die einen Winkel kleiner 90°zwischen sich bilden, vorzugsweise etwa von 40° bis 80°. Bezüglich der Ausgestaltung des Endabschnitts 24j, der Lage der Stirnseite 25j bezüglich der zweiten Windung 16j2, des Durchmesserunterschieds DD und der exzentrischen Anordnung e1 wird auf die Beschreibung zur ersten bis dritten Ausführungsform verwiesen. In der Draufsicht der Fig. 8c) und der perspektivischen Ansicht der Fig. 8d) ist hier auch die Lage der Stirnseite 25j gegenüber des Innenumfangs 17j der zweiten Windung 16j2 ersichtlich.

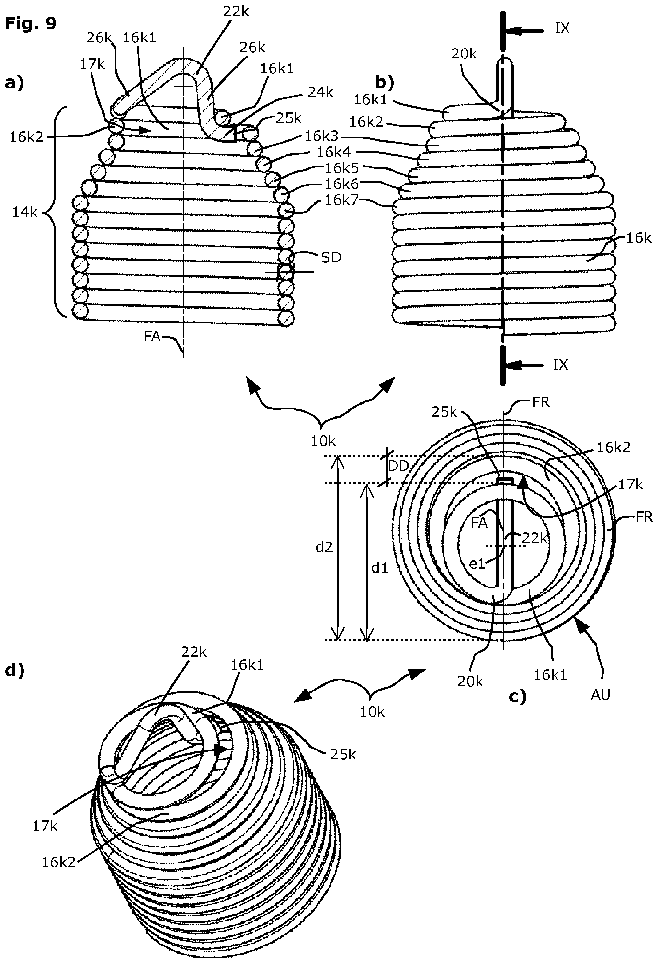

Fig. 9 zeigt eine fünfte Ausführungsform, bei welcher der Aufhängabschnitt 22k wie bei der dritten Ausführungsform winkelartig ausgebildet ist mit zwei Schenkelabschnitten 26k, die zwischen sich einen Winkel bilden von etwa 40° bis 50°. Die Zugfeder 10k ist als konische Feder ausgebildet, wobei die Radien bzw. die Durchmesser der Windungen 16k1 bis 16k7 unterschiedlich sind. Die erste Windung 16k1 hat dabei den kleinsten Durchmesser d1, der sich vom Durchmesser d2 der zweiten Windung 16k2 um die Differenz DD unterscheidet. Die Durchmesser der weiteren Windungen 16k3 bis 16k7 werden immer größer bis bei der Windung 16k7 der maximale Durchmesser erreicht ist, der dann für die Windungen 16k des restlichen Federkörpers 14k gleich bleibt bis zu einem anderen, hier nicht dargestellten Federende, das gleich oder andersartig ausgestaltet sein kann, wie das hier oder in anderen Beispielen dargestellte Federende.

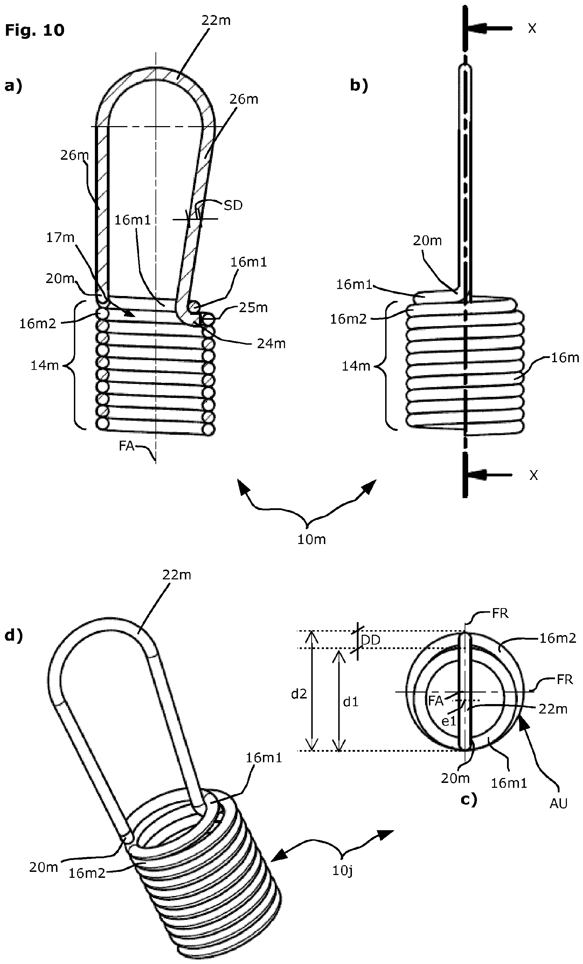

Fig. 10 zeigt eine sechste Ausführungsform, deren Anschlussstück 18m im Wesentlichen U-förmig ausgebildet ist, etwa vergleichbar zum fünften oder sechsten Beispiel (Fig. 4b) und 4c). Das Anschlussstück 18m umfasst zwei gerade Schenkelabschnitte 26m, die geneigt zueinander verlaufen. Der eine Schenkel, der sich an den Übergangsabschnitt 20m anschließt verläuft im Wesentlichen parallel zur Federachse FA, während der zweite Schenkelabschnitt 26m, der in den freien Endabschnitt 24m mündet leicht geneigt zur Federachse FA verläuft. Dieser geneigte Verlauf des Schenkelabschnitts 26m ist bedingt durch den kleineren Durchmesser d1 der ersten Windung 16m1 und dem Anliegen des Endabschnitts 24m an der ersten Windung 16m1. Bezüglich der Ausgestaltung des Endabschnitts 24m, der Lage der Stirnseite 25m bezüglich der zweiten Windung 16m2, des Durchmesserunterschieds DD und der exzentrischen Anordnung e1 wird auf die Beschreibung zur ersten bis fünften Ausführungsform verwiesen.

Auch wenn in den vorangehenden Ausführungsformen bevorzugt eine exzentrische Anordnung der ersten Windung relativ zur zweiten bzw. zu weiteren Windungen dargestellt ist, ist es ebenso möglich, die erste Windung und die zweite bzw. die weiteren Windungen konzentrisch zueinander anzuordnen.

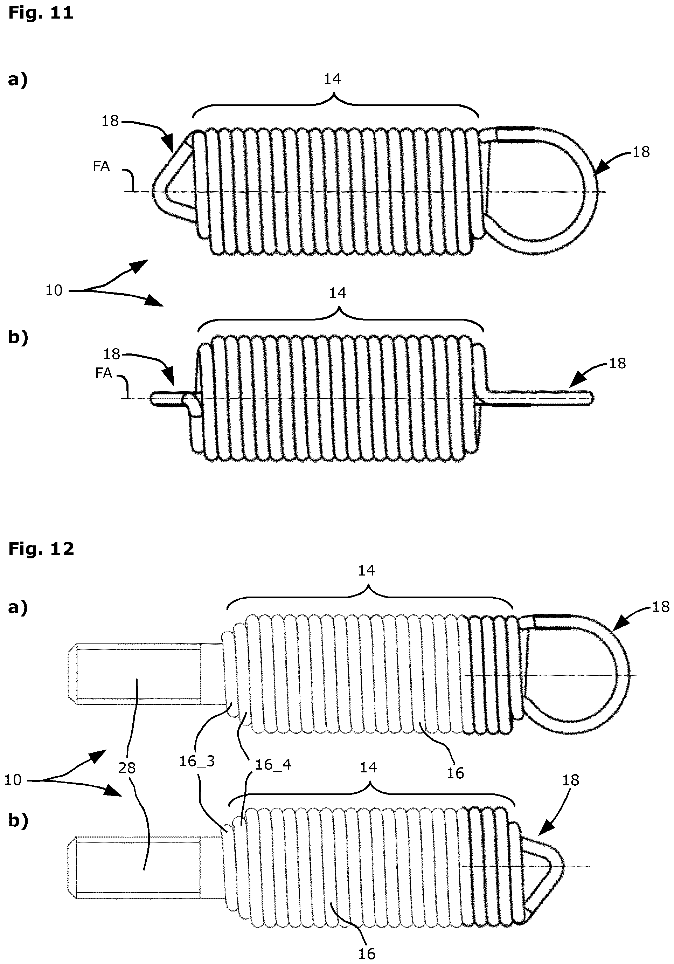

Figur 11 zeigt eine Zugfeder 10 in seitlichen Aufrissdarstellungen, in denen die Zugfeder um 90° um die Federachse FA gedreht dargestellt ist. Beispielhaft sind am Federkörper 14 zwei in axialer Richtung FA entgegengesetzt angeordnete Federenden dargestellt mit ihren jeweiligen Anschlussstücken 18. Die Zugfeder 10 zeigt die Anschlussstücke entsprechend der zweiten und vierten Ausführungsform (Fig. 6 und Fig. 8). Auch wenn hier an einer Zugfeder unterschiedlich ausgeführte Anschlussstücke dargestellt sind, können an den beiden Federenden auch gleiche Anschlusstücke entsprechend den vorgestellten Ausführungsformen vorgesehen sein. Ferner können die unter Bezugnahme auf die Figuren 1 bis 10 vorgestellten Beispiele und Ausführungsformen von Anschlusstücken beliebig miteinander kombiniert werden.

Figur 12 zeigt schließlich Ausführungsformen von Zugfedern 10, bei denen am einen Federende des Federkörpers 14 Anschlussstücke 18 entsprechend der zweiten und vierten Ausführungsform (Fig. 6 und Fig. 8) vorgesehen sind. Am anderen Federende sind Einschraubstücke 28 vorgesehen, die mit Windungen 16_3, 16_4 verbunden sind. Die Radien der Krümmung bzw. der Biegung der Windungen 16_3 bzw. 16_4 sind kleiner bzw. werden kleiner bezogen auf den Biegeradius der anderen Windungen 16 des Federkörpers 14. Selbstverständlich können auch andere vorgestellte Ausführungsformen von Anschlusstücken mit einem Einschraubstück 28 kombiniert werden. Ferner wird darauf hingewiesen, dass anstelle eines Einschraubstücks 28 auch andere geeignete Verbindungen zwischen der Zugfeder 10 und einem weiteren Bauteil denkbar sind. Denkbar ist auch eine materialschlüssige Verbindung eines Federendes, etwa mittels Verschweißen oder dergleichen.

Zur Sicherung der Verbindung zwischen den jeweiligen Endabschnitten 24 und der ersten Windung 16_1 ist es auch denkbar, dass die Endabschnitte 24 nicht nur an den Windungen anliegen, sondern mit diesen materialschlüssig verbunden sind, etwa mittels Verschweißung oder mittels einer Kunststoffummantelung. Denkbar ist es auch, dass die Endabschnitte 24 mittels eines Adapters, der an der entsprechenden Windung vorgesehen ist, mit dieser Windung in Verbindung gebracht werden kann.

Das Grundprinzip der vorgestellten Zugfeder ist bei allen Ausführungsformen das gleiche: der Endabschnitt 24 liegt an einer Windung des Federkörpers an, so dass unter Zugbelastung Kräfte auf den Endabschnitt übertragen werden können. Bevorzugt ist dies die erste Windung 16_1, die sich an das Anschlussstück 18 bzw. die Öse anschließt. Dabei weist die erste Windung 16_1 einen kleineren oder kleiner werdenden Krümmungsradius bzw. Durchmesser auf als sich in axialer Richtung anschließende Windungen des Federkörpers. Denkbar, aber herstellungstechnisch aufwändiger und komplizierter, ist es auch, den Endabschnitt 24 an einer anderen als der ersten Windung 16_1 anzubringen bzw. einzuhängen, wie etwa der zweiten oder einer weiter entfernten Windung.

Aus den hier vorgestellten Ausführungsformen wird ersichtlich, dass die jeweilige Ausgestaltung der Endabschnitte (hakenartig bzw. offen, gerade, ringförmig bzw. geschlossen, Einführung von innen nach außen oder umgekehrt) und der Form des Anschlussstücks 18 bzw. des Aufhängabschnitts 22 frei miteinander kombinierbar sind. Dies gilt auch für die Ausgestaltung des Biegeradius der ersten Windung 16_1 bzw. weiteren Windungen. Die dargestellten Ösenformen sind keinerlei einschränkend zu verstehen, es können auch noch andere Formen, wie etwa englische Öse, doppelte Ösen und dergleichen verwendet werden.

Abschließend wird auf einen Vergleichsversuch hingewiesen, der durch die Anmelderin durchgeführt worden ist.

Eine Zugfeder mit herkömmlicher Ösenform, also ohne an der ersten Windung anliegendem Endabschnitt, mit einem Strangdurchmesser von 3 Millimetern brach im Bereich des Übergangsabschnitts zwischen erster Windung und Öse nach etwa drei tausend Lastwechseln. Gefordert waren sichere elf tausend Lastwechsel.

Um dies zu erreichen wurden eine herkömmliche Vergleichsfeder und eine erfindungsgemäße Feder (HiSo-Feder), die von der Formgebung im Wesentlichen der sechsten Ausführungsform entsprach, eingesetzt und miteinander verglichen. Die Vergleichsfeder wurde hinsichtlich ihrer Lebensdauer schon verbessert, war jedoch im Hinblick auf eine sichere Funktion der Baugruppe an der unteren Grenze, was die Ausübung der geforderten Zugkräfte betraf. Die wichtigsten Parameter des Vergleichs sind in nachfolgender Tabelle zusammengefasst:

| | Vergleichsfeder | HiSo-Feder | Verbesserung HiSo zur Vergleichsfeder |
|---|---|---|---|
| Abmessungen | SD = 2,8mm | SD = 2,8mm | |
| SD = Strangdurchmesser | De = 15,4mm | De = 19,7mm | |
| De = Durchmesser Windung | n = 46,75 | n = 18,75 | |
| n = Anzahl Windungen | Le = 154,7mm | Le = 148,3mm | |
| Le = Länge im entspannten Zustand | | | |
| Gewicht | 93 Gramm | 60 Gramm | -35% |
| F1 bei Lg = 156mm | 75N | 86N | +15% |
| F2 bei Lg = 205mm | 369N | 389N | +5% |
| Federrate | 5,998N/mm | 6,197N/mm | +3,3% |
| Lebensdauer | 9.000-12.000 | 42.000 bis 44.000 | 4-fach |
| | Lastwechsel | Lastwechsel | |
| Bruchstelle | Ösen | Federkörper | |

Lg bezeichnet dabei die Länge in einem gespannten Zustand der Feder (Auseinanderziehen der Federenden) und F1 bzw. F2 die dabei aufgenommenen Zugkräfte.

Die Vergleichsfeder wurde für die gewünschte Lebensdauer im Rahmen des zur Verfügung stehenden Bauraumes optimiert. Zur Reduzierung der Spannungen in den Ösen wurde ein kleines Wickelverhältnis (De/SD) gewählt.

Bei der erfindungsgemäßen HiSo-Feder wurden die Kräfte für eine sichere Funktion im Rahmen der zulässigen Spannungen im Federkörper angehoben. Wickelverhältnis und Windungsanzahl wurden an den Bauraum angepasst.

Durch die Verwendung einer erfindungsgemäßen Feder konnte etwa ein Drittel an Material eingespart werden, einhergehend mit einer entsprechenden Gewichtsreduktion der Zugfeder. Gleichzeitig konnte durch die HiSo-Feder mit verkleinertem Durchmesser der ersten Windung und mit Zugkraft übertragendem Endabschnitt die Lebensdauer der Zugfeder um das 4-Fache erhöht werden bis ein Bruch des Federkörpers erfolgte. Aufgrund der veränderten Gestaltung des Anschlussstücks bzw. der Öse (mit Zugkraft übertragendem Endabschnitt) treten die maximalen Spannungen nicht mehr in der Öse, insbesondere im Übergangsabschnitt zwischen erster Windung und Öse auf, sondern im Federkörper. Entsprechend kann der eingesetzte Strangdurchmesser (Drahtquerschnitt) maximal ausgenutzt werden, was zu einer deutlichen Reduktion der federnden Masse führt. Die freien Endabschnitte, die an der ersten Windung anliegen bzw. eingehängt sind, sind durch die weiteren Windungen, insbesondere die zweite Windung geschützt, so dass die Gefahr von Verletzungen oder von Beschädigungen angrenzender Bauteile reduziert bzw. verhindert ist. Es hat sich ferner gezeigt, dass die Materialeinsparung den etwas erhöhten Herstellungsaufwand bereits ab einer vierstelligen Stückzahl der HiSo-Feder kompensiert.

Bezugszeichenliste (Nummern ohne Buchstaben, wobei der Platzhalter "_" (Unterstrich) für einen Kleinbuchstaben steht)
- 10: Zugfeder
- 12: Federende
- 14: Federkörper
- 16: Windungen
- 16_1: erste Windung
- 16_2: zweite Windung
- 16_3 bis 16_7: weitere Windungen
- 17: Innenumfang / Innenseite
- 18: Anschlussstück
- 20: Übergangsabschnitt
- 22: Aufhängabschnitt
- 24: freier Endabschnitt
- 25: Stirnseite (des Endabschnitts)
- 26: Schenkelabschnitt

## Patentansprüche

1. Zugfeder, umfassend
einen Windungen (16) aufweisenden Federkörper (14) und
in axialer Richtung (FA) entgegengesetzt am Federkörper (14) angeordnete Federenden (12) zum Anschließen der Zugfeder (10) an miteinander zu verbindenden Bauteilen,
wobei wenigstens ein Federende (12) als Anschlussstück (18), vorzugsweise in Form einer Öse, ausgebildet ist, das einen Übergangsabschnitt (20), einen Aufhängabschnitt (22) und einen freien Endabschnitt (24) umfasst, wobei der Übergangsabschnitt (20) des Anschlussstücks (18) mit einer in axialer Richtung (FA) des Federkörpers (14) zum Anschlussstück (18) benachbarten ersten Windung (16_1) des Federkörpers (14) verbunden ist,
wobei der Übergangsabschnitt (20) in den Aufhängabschnitt (22) übergeht und der Aufhängabschnitt (22) in den freien Endabschnitt (24) übergeht, und wobei
der freie Endabschnitt (24) des wenigstens einen Anschlussstücks (18) mit der ersten Windung (16_1) des Federkörpers (14) in Kraftübertragungsverbindung steht, um auf die Zugfeder (10) wirkende Kräfte am Übergangsabschnitt (20) und am freien Endabschnitt (24) des Anschlussstücks (18) einzuleiten,
**dadurch gekennzeichnet, dass** die erste Windung (16_1) einen kleineren oder kleiner werdenden Radius bzw. Durchmesser aufweist als eine sich anschließende weitere Windung (16) des Federkörpers (14), und dass der freie Endabschnitt (24) derart ausgebildet ist, dass er im entspannten Zustand der Zugfeder im Inneren des Federkörpers (14) angeordnet ist.

2. Zugfeder nach Anspruch 1, **dadurch gekennzeichnet, dass** die Durchmesserdifferenz zwischen der ersten Windung (16_1) und der benachbarten Windung (16_2) abhängig von einem Strangdurchmesser (SD) eines Strangs ist, aus dem die Zugfeder (10) bzw. die Windungen (16) des Federkörpers (14) gebildet sind.

3. Zugfeder nach Anspruch 2, **dadurch gekennzeichnet, dass** die Durchmesserdifferenz (DD) etwa das 1,0 bis 3,0-Fache des Strangdurchmessers (SD) beträgt, vorzugsweise etwa das 1,1 bis 2,0-Fache, insbesondere etwa das 1,1 bis 1,5-Fache.

4. Zugfeder nach einem der vorhergehenden Ansprüche, **dadurch gekennzeichnet, dass** der Mittelpunkt (e1; e2) der ersten Windung (16_1) bezogen auf die axiale Richtung (FA) in radialer Richtung (FR) versetzt ist, vorzugsweise um einen Versatz, der etwa dem 0,5-Fachen bis 1,0-Fachen der Durchmesserdifferenz (DD) zwischen der ersten Windung (16_1) und der anschließenden weiteren Windung (16_2) entspricht.

5. Zugfeder nach einem der vorhergehenden Ansprüche, **dadurch gekennzeichnet, dass** der an der ersten Windung (16_1) anliegende freie Endabschnitt (24) derart ausgebildet ist, dass sich die erste Windung (16-1) im entspannten Zustand der Zugfeder (10) in axialer Richtung (FA) direkt an die benachbarte Windung (16_2) anschließt, so dass zwischen der ersten Windung (16_1) und der benachbarten Windung (16_2) im Wesentlichen der gleiche axiale Abstand gebildet ist wie zwischen anderen benachbarten Windungen (16) des Federkörpers (14).

6. Zugfeder nach einem der vorhergehenden Ansprüche, **dadurch gekennzeichnet, dass** der freie Endabschnitt (24) derart ausgebildet ist, dass er im Wesentlichen geradlinig, vorzugsweise in im Wesentlichen radialer Richtung (FR) bezogen auf die Windung, von der ersten Windung (16_1) zur benachbarten Windung (16_2) verläuft und an der ersten Windung (16_1) des Federkörpers anliegt.

7. Zugfeder nach einem der vorhergehenden Ansprüche, **dadurch gekennzeichnet, dass** der freie Endabschnitt (24) eine Stirnseite (25) aufweist, die der benachbarten Windung (16_2) in radialer Richtung (FR) gegenüberliegt, insbesondere ihrem Innenumfang (17) gegenüber liegt, wobei vorzugsweise der freie Endabschnitt (24) eine radiale Länge aufweist, die im Wesentlichen gleich lang oder länger ist wie der Durchmesser (SD) eines Strangs, aus dem die Zugfeder bzw. die Windungen hergestellt sind.

8. Zugfeder nach einem der vorhergehenden Ansprüche, **dadurch gekennzeichnet, dass** der freie Endabschnitt materialschlüssig mit der wenigstens einen Windung verbunden ist oder dass der freie Endabschnitt des Anschlussstücks mittels eines Adapters mit der wenigstens einen Windung verbunden ist.

9. Zugfeder nach einem der vorhergehenden Ansprüche, **dadurch gekennzeichnet, dass** das Anschlussstück (18) als halbe oder ganze deutsche Öse oder englische Öse oder Hakenöse oder dergleichen ausgeführt ist.

10. Zugfeder nach einem der vorhergehenden Ansprüche, **dadurch gekennzeichnet, dass** beide Federenden (12) als Anschlusstücke (18), vorzugsweise Ösen ausgeführt sind oder dass das nicht als Anschlussstück (18) ausgeführte Federende (12) ein Einschraubstück (28), Gewindebolzen oder dergleichen aufweist.

11. Zugfeder nach einem der vorhergehenden Ansprüche, **dadurch gekennzeichnet, dass** der Federkörper (14) zylindrisch oder konisch gestaltet ist, wobei die Windungen (16) des Federkörpers (14) kreisförmig oder oval oder vieleckig oder gebogen mit unterschiedlichen Radien ausgebildet sind.

12. Zugfeder nach einem der vorhergehenden Ansprüche, **dadurch gekennzeichnet, dass** sie aus einem Strang oder einem Draht oder Rohr gebildet ist, wobei der Strang- oder der Draht- oder Rohrquerschnitt vorzugsweise kreisförmig oder oval oder vieleckig ausgeführt ist, wobei vorzugsweise die Zugfeder aus einem Metall oder einer Metalllegierung oder/und einem Kunststoff hergestellt ist.

13. Zugfeder nach einem der vorhergehenden Ansprüche, **dadurch gekennzeichnet, dass** das Anschlussstück (18) gerade oder/und gebogen, insbesondere rund oder oval oder vieleckig ausgeführt ist.

## Claims

1. Tension spring, comprising
a spring body (14) having windings (16) and spring ends (12) in opposite locations on the spring body (14) in the axial direction (FA) for connecting the tension spring (10) to components to be joined together,
wherein at least one spring end (12) is configured as a connection piece (18), preferably in the shape of an eye, which comprises a transition portion (20), a suspension portion (22) and a free end portion (24), wherein the transition portion (20) of the connection piece (18) is attached to the first winding (16_1) of the spring body (14) adjacent to the connection piece (18) in the axial direction (FA) of the spring body (14).
wherein the transition portion (20) merges into the suspension portion (22) and the suspension portion (22) into the free end portion (24), and wherein
the free end portion (24) of at least one connection piece (18) has a force transmitting attachment to the first winding (16_1) of the spring body (14), in order to introduce forces acting on the tension spring (10) to the transition portion (20) and to the free end portion (24) of the connection piece (18),
**characterised in that** the first winding (16_1) has a smaller radius or diameter, or one becoming smaller, than an adjacent further winding (16) of the spring body (14), and that the free end portion (24) is configured so that it is located in the interior of the spring body (14) in the unstressed state of the tension spring.

2. Tension spring according to claim 1, **characterised in that** the difference in diameter between the first winding (16_1) and the adjacent winding (16_2) is dependent on the strand diameter (SD) of a strand, from which the tension spring (10) or windings (16) of the spring body (14) is or are formed.

3. Tension spring according to claim 2, **characterised in that** the difference in diameter (DD) is about 1.0 to 3.0 times the strand diameter (SD), preferably about 1.1 to 2.0 times, in particular about 1.1 to 1.5 times.

4. Tension spring according to one of the preceding claims, **characterised in that** the centre (e1 ; e2) of the first winding (16_1) is displaced in the radial direction (FR) with respect to the axial direction (FA), preferably by an offset which corresponds to about 0.5 to 1.0 times the difference in diameter (DD) between the first winding (16_1) and the following further winding (16_2).

5. Tension spring according to one of the preceding claims, **characterised in that** the free end portion (24) on the first winding (16_1) is configured so that, when the tension spring (10) is in an unstressed state, the first winding (16_1) interfaces in the axial direction (FA) directly with the adjacent winding (16_2) so that the axial distance between the first winding (16_1) and the adjacent winding (16_2) is substantially the same as between other adjacent windings (16) of the spring body (14).

6. Tension spring according to one of the preceding claims, **characterised in that** the free end portion (24) is configured so that it is substantially straight, preferably passes in a substantially radial direction (FR) with respect to the winding from the first winding (16_1) to the adjacent winding (16_2) and abuts the first winding (16_1) of the spring body.

7. Tension spring according to one of the preceding claims, **characterised in that** the free end portion (24) has an end face (25) which is opposite the adjacent winding (16_2) in the radial direction (FR), in particular is opposite its inner circumference (17), wherein the free end portion (24) has a radial length, which is substantially the same in length or longer than the diameter (SD) of a strand from which the tension spring or the windings are produced.

8. Tension spring according to one of the preceding claims, **characterised in that** the free end portion is integrally connected to at least one winding or that the free end portion of the connection piece is attached to at least one winding by means of an adapter.

9. Tension spring according to one of the preceding claims, **characterised in that** the connection piece (18) is executed as a half or complete German eye or English eye or hook eye or the like.

10. Tension spring according to one of the preceding claims, **characterised in that** both spring ends (12) are executed as connection pieces (18), preferably eyes, or that the spring end (12) not acting as connection piece (18) has a threaded connection (28), threaded bolt or the like.

11. Tension spring according to one of the preceding claims, **characterised in that** the spring body (14) is cylindrical or tapered, wherein the windings (16) of the spring body (14) are circular or oval or polygonal or curved with different radii.

12. Tension spring according to one of the preceding claims, **characterised in that** it is formed from a strand or a wire or tube, wherein the strand or wire or tube cross section is preferably circular or oval or polygonal, wherein preferably the tension spring is manufactured from a metal or a metal alloy or/and a plastic.

13. Tension spring according to one of the preceding claims, **characterised in that** the connection piece (18) is straight or/and bent, in particular round or oval or polygonal.

## Revendications

1. Ressort de traction comprenant
un corps de ressort (14) comportant des spires (16), et
des extrémités de ressort (12) qui sont disposées sur le corps de ressort (14) à l'opposé dans le sens axial (FA) et qui sont destinées à relier le ressort de traction (10) à des éléments de construction à relier entre eux,
au moins une extrémité de ressort (12) étant conçue comme une pièce de raccordement (18), de préférence en forme d'oeillet, qui comprend une section de transition (20), une section de suspension (22) et une section d'extrémité libre (24), la section de transition (20) de la pièce de raccordement (18) étant reliée à une première spire (16 1) du corps de ressort (14) voisine de ladite pièce de raccordement (18) dans le sens axial (FA) dudit corps de ressort (14),
la section de transition (20) se prolongeant par la section de suspension (22), et la section de suspension (22) se prolongeant par la section d'extrémité (24), et
la section d'extrémité libre (24) de la ou des pièces de raccordement (18) étant en relation de transmission de force avec la première spire (16_1) du corps de ressort (14) afin d'introduire au niveau de la section de transition (20) et de la section d'extrémité libre (24) de la pièce de raccordement (18) les forces qui agissent sur le ressort de traction (10),
**caractérisé en ce que** la première spire (16_1) présente un rayon ou un diamètre plus petit ou qui devient plus petit qu'une autre spire (16) suivante du corps de ressort (14), et **en ce que** la section d'extrémité libre (24) est conçue de telle sorte qu'elle est disposée, à l'état détendu du ressort de traction, à l'intérieur du corps de ressort (14).

2. Ressort de traction selon la revendication 1, **caractérisé en ce que** la différence de diamètre entre la première spire (16_1) et la spire voisine (16_2) dépend du diamètre (SD) d'un cordon à partir duquel le ressort (10) et les spires (16) du corps de ressort (14) sont formés.

3. Ressort de traction selon la revendication 2, **caractérisé en ce que** la différence de diamètre (DD) est égale à environ 1,0 à 3,0 fois le diamètre de cordon (SD), de préférence 1,1 à 2,0 fois, en particulier environ 1,1 à 1,5 fois.

4. Ressort de traction selon l'une des revendications précédentes, **caractérisé en ce que** le centre (e1 ; e2) de la première spire (16_1) est décalé par rapport au sens axial (F) dans le sens radial (FR), de préférence d'une valeur qui correspond à environ 0,5 à 1,0 fois la différence de diamètre (DD) entre la première spire (16_1) et l'autre spire suivante (16_2).

5. Ressort de traction selon l'une des revendications précédentes, **caractérisé en ce que** la section d'extrémité libre (24) appliquée contre la première spire (16_1) est conçue de telle sorte que la première spire (16_1), à l'état détendu du ressort de traction (10), fait suite directement à la spire (16_2) dans le sens axial (FA), ce qui forme entre la première spire (16_1) et la spire voisine (16_2) globalement le même écartement axial qu'entre les autres spires voisines (16) du corps de ressort (14).

6. Ressort de traction selon l'une des revendications précédentes, **caractérisé en ce que** la section d'extrémité libre (24) est conçue de telle sorte qu'elle est globalement rectiligne et s'étend, de préférence dans le sens globalement radial (FR) par rapport à la spire, de la première spire (16_1) à la spire voisine (16_2) et est appliquée contre la première spire (16_1) du corps de ressort.

7. Ressort de traction selon l'une des revendications précédentes, **caractérisé en ce que** la section d'extrémité libre (24) présente un côté frontal (25) qui se trouve en face de la spire voisine (16_2) dans le sens radial (FR), en particulier en face de sa périphérie intérieure (17), ladite section d'extrémité libre (24) présentant de préférence une longueur radiale qui est globalement aussi longue ou plus longue que le diamètre (SD) d'un fil à partir duquel le ressort de traction ou les spires sont fabriqués.

8. Ressort de traction selon l'une des revendications précédentes, **caractérisé en ce que** la section d'extrémité libre est venue de matière avec la ou les spires, ou **en ce que** la section d'extrémité libre de la pièce de raccordement est reliée à l'aide d'un adaptateur à la ou aux spires.

9. Ressort de traction selon l'une des revendications précédentes, **caractérisé en ce que** la pièce de raccordement (18) est conçue comme un demi-oeillet allemand ou oeillet fermé allemand, ou un oeillet anglais, ou un oeillet à crochet ou un oeillet similaire.

10. Ressort de traction selon l'une des revendications précédentes, **caractérisé en ce que** les deux extrémités de ressort (12) sont conçues comme des pièces de raccordement (18), de préférence des oeillets, ou **en ce que** l'extrémité de ressort (12) qui n'est pas conçue comme une pièce de raccordement (18) comporte une pièce à vis (28), une tige filetée ou une partie similaire.

11. Ressort de traction selon l'une des revendications précédentes, **caractérisé en ce que** le corps de ressort (14) est cylindrique ou conique, les spires (16) du corps de ressort (14) étant circulaires ou ovales ou polygonales ou courbes avec des rayons différents.

12. Ressort de traction selon l'une des revendications précédentes, **caractérisé en ce qu'**il est formé à partir d'un cordon ou d'un fil ou d'un tube, la section transversale du cordon ou du fil ou du tube étant de préférence circulaire ou ovale ou polygonale, le ressort de traction étant fabriqué de préférence à partir d'un métal ou d'un alliage de métal ou/et d'une matière plastique.

13. Ressort de traction selon l'une des revendications précédentes, **caractérisé en ce que** la pièce de raccordement (18) est droite ou/et courbe, en particulier ronde ou ovale ou polygonale.
